# EUROPEAN PATENT SPECIFICATION

(11) **EP 3 173 282 B1**
(45) Date of publication and mention of the grant of the patent: **03.01.2018**
(21) Application number: 16152549.8
(22) Date of filing: 25.01.2016
(51) Int. Cl.: B60L 7/14, B60L 7/18, B60L 7/28, B60L 11/18, H02K 19/10, H02K 1/32, B60L 15/08, B60L 15/02, H02K 7/00, H02K 9/197, H02K 17/16

(54) **METHOD OF OPERATING AN ELECTRICALLY PROPELLED VEHICLE**
VERFAHREN ZUM BETRIEB EINES ELEKTRISCH ANGETRIEBENEN FAHRZEUGS
MÉTHODE D'OPÉRATION D'UN VÉHICULE À PROPULSION ÉLECTRIQUE

(30) Priority: 09.10.2015 EP 15189106
(43) Date of publication of application: 31.05.2017
(73) Proprietor: AVL List GmbH, 8020 Graz (AT)
(72) Inventor: DAVYDOV, Vitaly, 8020 GRAZ (AT)
(74) Representative: Babeluk, Michael

(56) References cited:
- EP-A1- 2 754 596
- DE-A1-102009 001 838
- US-A- 5 389 825
- US-A1- 2005 257 970
- US-A1- 2014 066 248
- AZIZUR RAHMAN M ET AL: "A Permanent Magnet Hysteresis Hybrid Synchronous Motor for Electric Vehicles", IEEE TRANSACTIONS ON INDUSTRIAL ELECTRONICS, IEEE SERVICE CENTER, PISCATAWAY, NJ, USA, vol. 44, no. 1, 1 February 1997 (1997-02-01), XP011023215, ISSN: 0278-0046

## Description

The invention relates to a method of operating an electrically propelled vehicle with at least one electric machine having a stator and a rotor with a rotor core, the rotor being kinematically connected with at least one driving wheel, the electric machine being connected to a control device and an energy source, wherein said electric machine is designed as a hysteresis machine and the rotor core of the rotor comprises at least one cooling channel.

The internet link http://www.magtrol.com/datasheets/ahb.pdf discloses a hysteresis motor with a stator and a rotor, wherein the rotor comprises a smooth cylinder consisting of a permanent-magnet alloy material and a nonmagnetic support. The document Azizur Rahman M. et al.: "A Permanent Magnet Hysteresis Hybrid Synchronous Motor for Electric Vehicles", IEEE Transactions on Industrial Electronics, IEEE Service Center, Piscataway, NJ, USA, vol. 44, not.1, 1 February 1997 (1997-02-01), ISSN: 0278-0046 discloses an electric motor for electric vehicle traction having a stator and a rotor with a rotor core. The rotor is kinematically connected with a shaft, the electric machine is connected to a PWM voltage source inverter and an energy source, wherein the motor is designed as a hysteresis machine. The rotor core comprises a hard magnetic material and at least one cooling channel. US 1,448,700 A discloses a liquid cooled electric machine comprising a rotor cooling with supply and drain of cooling media through the shaft ends.

The document WO 2015/128013 A1 describes a method for braking a rotating element of an assembly, wherein a rotor of a rotating element is rotatably fixed to the rotating element and a stator of the rotating eddy current brake is supported on the assembly. During the braking operation, an excitation coil assembly of the stator is supplied with rotary current, by an electrical energy source controlled by a control command of a control unit, in such a way that a rotary field of the stator rotates at an electrical angular speed. Via a control command-effected adjustment of the electrical angular speed of the rotary field of the stator, the instantaneous difference between an instantaneous electrical angular speed of the rotor and the adjusted electrical angular speed of the rotary field of the stator is controlled to a desired value defined by the control unit or determined by the control unit. The performance of an eddy current brake is slip dependent and is not sufficient to substitute friction brakes.

It is the object of the present invention to enable high efficiency at driving and regenerative braking modes, and to reduce losses at rotor stall modes.

According to the invention this is achieved in that the rotor core of the rotor is formed of a hard magnetic material, wherein:
- if the vehicle operates in synchronous braking mode, and the output electric power of the hysteresis machine does not exceed instant power capacity of the control device and/or battery, the control device is operated in such a way that a rotational speed of an electromagnetic field of the stator continues to equal to a rotational speed of the rotor, wherein a magnetic flux is controlled by a at least periodically applied flux current component I_{d} to the stator;
- if the vehicle operates in braking mode, and a potential output electric power of the hysteresis machine at synchronous speed of the stator electromagnetic field and the rotor exceeds an instant power capacity of the control device and/or battery, the control device is operated in such a way that the rotational speed of the electromagnetic field of the stator is maintained lower than the rotational speed of the rotor, wherein an actual output electric power of the hysteresis machine does not exceed instant power capacity of the control device and/or battery at a maintained speed.

E.g., said electric machine is a hysteresis machine with a rotor core of hard magnetic material, wherein said rotor comprises at least one channel for cooling media.

In this way a conventional braking system and main associated issues as wear of friction components and added unsprung weight can be avoided.

A hysteresis machine is an electric machine with a smooth rotor core of hard magnetic material, wherein the direction of rotor remanence magnetization can be reversed by the electromagnetic field from the stator. In detail a hysteresis machine is a synchronous electric machine, comprising a stator with windings and a non-salient rotor with a smooth core made of ferromagnetic material with high coercivity (>2.000 A/m, preferably 24.000 A/m..160.000 A/m). Such a material is called hard magnetic material. The stator winding is able to create rotating electromagnetic field, linked with rotor core. The hysteresis machine with a control device form a hysteresis drive, wherein the combination of the machine design, control device power capacity and rotor core material coercivity should ensure changeability of rotor remanence magnetization by the electromagnetic field from the stator.

Required emergency braking capacity of the vehicle over all operational speed range is available with limited capacity of the power line (inverter, battery).

Thermal durability of the hysteresis drive in asynchronous (hysteresis) braking mode is ensured by forced cooling of the rotor with heat-dissipating core of hard magnetic material.

E.g., the vehicle comprises at least two hysteresis electric machines each connected to the individual driving wheel, wherein said driving wheels belong to one driving axle of the vehicle. In this way an electric axle without wheel friction brakes can be realised, e.g. for rear axle with limited loads during intensive braking. This solution may be used for example in a part-time full wheel drive as auxiliary drive, e.g., in P4 hybrid vehicles, where front axle is driven by combustion engine with conventional mechanical transmission. The hysteresis drives of the rear axle may be powered with electric battery and/or additional electric motor-generator, kinematically connected to the combustion engine, to the input shaft of the mechanical transmission or to the front axle. The benefits of this solution are:
▪ no wheel brakes on the axle;
▪ mechanical efficiency and cooling system performance of the hysteresis drives are not critical in short-time modes;
▪ limited capacity of the electric system required to meet braking performance targets;
▪ torque vectoring is possible.

Alternatively the vehicle may comprise a plurality hysteresis electric machines each connected to the individual driving wheel, wherein all wheels of the vehicles are driving. In this way a full wheel drive can be realised with maximum advantageous effects: the vehicle needs no wheel friction brakes at all. Preferably the size of the hysteresis drive of the front wheels is designed larger than the hysteresis drive of the front wheels, because the front wheels are heavily loaded during intensive braking. The benefits of this solution are:
▪ no wheel brakes at all - no wear, no pollution, no regular maintenance;
▪ individual control of the tractive or braking effort on each wheel with fast response improves safety, handling, cross-country capacity.

For instance, the hysteresis machine is mounted on the vehicle chassis and connected to the driving wheel via a side shaft with constant velocity joints. The advantages of this example are low unsprung weight, simple transmission with high efficiency and low NVH (NVH-noise, vibration, harshness). Therefore this is a preferred arrangement for axial machines and inverted radial machines with air cooling of the rotor.

For example, the hysteresis machine is mounted on the vehicle chassis and connected to the driving wheel via speed reducer and side shaft with constant velocity joints. This arrangement enables low unsprung weight and the usage of a downsized high-speed hysteresis machine, e.g. a radial machine with liquid cooling of the rotor.

Alternatively the hysteresis machine may be mounted on a wheel hub of a driving wheel and connected to the driving wheel via a speed reducer. This enables a small package of the driving axle with a downsized high-speed hysteresis machine, e.g., a radial machine with liquid cooling of the rotor. The same advantages - additionally with low NVH - may be gained if the hysteresis machine is mounted on the wheel hub and connected to the driving wheel directly.

Especially for a radial machine with liquid cooling through the shaft, the speed reducer may comprise at least one cylindrical gear stage. This enables access to both shaft ends of the hysteresis machine. Alternativly the speed reducer may comprise at least one planetary gear stage, which is a compact and efficient solution, preferably for hub-integrated drive with high-speed air-cooled axial hysteresis machine.

The hysteresis machine may be embodied as radial machine with an external stator and an internal rotor. This enables low inertia of the rotor and an opportunity to feed the cooling media through the shaft. Especially in combination with a cylindrical gear reduction stage this may be the basis for a simple configuration for liquid cooling. The stator comprises a core made of soft magnetic material and a plurality of coils connected to a power converter with opportunity of forming a multi-pole rotatable magnetic field in the stator bore. The rotor is arranged concentrically within a bore of said stator, and comprises a core, made of hard magnetic material, and a shaft, connected to each other with capability of torque transfer. Alternatively the stator may be arranged concentrically within the rotor. The rotor comprises at least one channel for cooling media with at least one inlet and one outlet at shaft ends.

Alternatively the hysteresis machine may be embodied as inverted radial machine with an internal stator and an external rotor, wherein the stator is arranged concentrically within a bore of the rotor. An inverted radial machine having an internal stator and an external rotor is characterized with high torque density. A large possible number of poles allows to increase stator field frequency and to reduce the amount of hard magnetic alloy (e.g. Alnico-alloy) in the rotor core. Therefore this would be a preferred configuration for low-speed/high torque applications.

In each of example mentioned above the cooling channels in the rotor may be arranged predominantly in an axial orientation.

For example, the hysteresis machine is embodied as a double-sided axial machine, wherein the cooling channels in the rotor have predominantly radial orientation. The radial orientation of the cooling channels enables air feed by centrifugal force. Therefore, this arrangement is a preferred configuration for an air cooled machine.

Basically, the cooling media may be a liquid or air. In examples with liquid cooling the vehicle comprises a cooling circuit of the rotor with at least one pump and at least one cooler. Enabling highest thermal durability this may be a preferred solution for heavy duty vehicles or front axles of the light duty vehicles.

In examples with air cooling the vehicle and/or hysteresis machine further comprise means for air feed through the channels in the rotor. Air cooling examples are very simple systems being characterised by low cost and weight. There are different way to provide air circulation:
▪ radial channels in the rotor for centrifugal feeding by rotation of the rotor;
▪ wheel disc with a function of the fan, e.g. by blade-shaped wheel spokes;
▪ vehicle aerodynamic deflectors guiding the air flow through the wheels;

At least one of said cooling channels may be formed by at least one face of the rotor core. The integration of the cooling channels into the rotor core provides direct contact between the heat source and the cooling media. This is a preferred solution for liquid cooling.

Alternatively at least one of said cooling channels may be formed in a heat sink which is thermally connected to the rotor core. Heat sink of non-magnetic and heat conductive material (e.g. aluminium alloy or austenitic steel) improves heat transfer to the cooling media with low coefficient of convection. Thermal connection between heat sink and rotor core may be provided by welding, bonding or riveting. This is a preferred solution for air cooling.

In order to realize an operation of the hysteresis motor-brake with high efficiency, the method according to the present invention is provided with steps as following:
- if the vehicle operates in driving mode, the rotational speed of the stator electromagnetic field of the hysteresis machine equals to the rotational speed of its rotor, wherein the magnetic flux is controlled by at least periodically applied flux current component I_{d} to the stator;
- if the vehicle operates in synchronous braking mode, and the output electric power of the hysteresis machine does not exceed instant power capacity of the control device and/or battery, the control device is operated in such a way that a rotational speed of an electromagnetic field of the stator continues to equal to a rotational speed of the rotor, wherein a magnetic flux is controlled by a at least periodically applied flux current component I_{d} to the stator;
- if the vehicle operates in braking mode, and a potential output electric power of the hysteresis machine at synchronous speed of the stator electromagnetic field and the rotor exceeds an instant power capacity of the control device and/or battery, the control device is operated in such a way that the rotational speed of the electromagnetic field of the stator is maintained lower than the rotational speed of the rotor, wherein an actual output electric power of the hysteresis machine does not exceed instant power capacity of the control device and/or battery at a maintained speed, wherein preferably the cooling media is fed through at least one cooling channel in the rotor.

High efficiency at driving and regenerative braking modes may be achieved in case of over-excitation of the hysteresis drive. The short time periodic pulses of positive flux current are applied to the stator in order to magnetize the rotor. After magnetization, the id current is released, thus reducing stator losses and improving power factor of the hysteresis drive. When the speed increases, and the back-EMF gets closer to max inverter output voltage, the short time periodic pulses of negative flux current are applied to the stator in order to demagnetize the rotor. The torque in synchronous modes is provided by field magnet component, which is proportional to motor flux and torque current component. When the required braking power exceeds maximum capacity of the hysteresis drive in synchronous mode, the stator field rotational speed (proportional to inverter output frequency) should be limited. The electromagnetic power is limited in this way, because it is proportional to the field rotational speed. The difference between shaft power and stator electromagnetic power is dissipated in the rotor core and evacuated by the cooling media.

The torque in asynchronous modes is provided by sum of the hysteresis torque and eddy-current torque. The hysteresis torque is proportional to minor hysteresis loop area of the rotor core material, and does not depend on slip. The eddy-current torque is slip-dependent. Both torque components in asynchronous modes depend on stator current, and may be controlled by changing said current. The max torque in asynchronous mode is higher than in synchronous mode, because the remanence flux in synchronous mode (without magnetization from the stator "id" current) is lower, than in asynchronous mode (with magnetization). The influence of the eddy current on resulting torque depends on design parameters, magnetomotive force and slip speed.

This control method of the hysteresis drive in combination with forced cooling of the rotor results to replacement of the wheel brakes, because the performance of the hysteresis drive in asynchronous braking mode is comparable to friction brakes even with strong limitation on the power of the electric system (power inverter, battery).

The invention is explained below in closer detail by reference to the drawings, wherein:
- Fig. 1: is a schematic illustration of an electrically propelled vehicle with a hysteresis machine according to a first example enabling the inventive methode;
- Fig. 2: is a schematic illustration of an electrically propelled vehicle with a hysteresis machine according to a second example enabling the inventive methode;
- Fig. 3: is a schematic illustration of an electrically propelled vehicle with a hysteresis machine according to a third example enabling the inventive methode;
- Fig. 4: is a schematic illustration of an electrically propelled vehicle with a hysteresis machine according to a fourth example enabling the inventive methode;
- Fig. 5: shows a detailed view of the vehicle according to the arrow V in Fig. 4;
- Fig. 6: is a schematic illustration of an electrically propelled vehicle with a hysteresis machine according to a fifth example enabling the inventive methode;
- Fig. 7: shows three-quarter section view of a hysteresis machine shown in Fig. 1 or Fig. 2;
- Fig. 8: shows a cross-section view of this hysteresis machine;
- Fig. 9: shows an oblique projection of a rotor of this hysteresis machine; and
- Fig. 10: shows a speed-torque diagram including operation modes of the hysteresis machine.

Parts having the same function are indicated in the Figs. with same reference numerals.

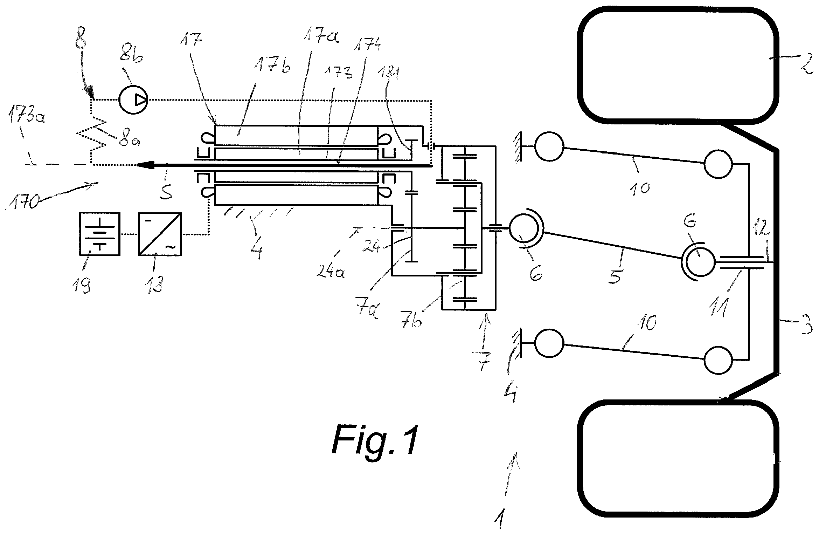

Fig. 1 shows an electrically propelled vehicle 1 with a hysteresis drive 170. The hysteresis drive 170 comprises a rotating electric machine which is designed as a hysteresis machine 17 with a rotor 17a and a stator 17b. The rotor 17a is kinematically connected with at least one driving wheel 2 of the vehicle 1, wherein two driving wheels 2 correspond to a driving axle of the vehicle 1. The windings 179 of the stator 17b are electrically connected to a control device 18, e.g. a multi-phase bidirectional power converter, and an energy source, i.e., a DC link 19, for example a battery. The power converter comprises a three-phase voltage-source inverter.

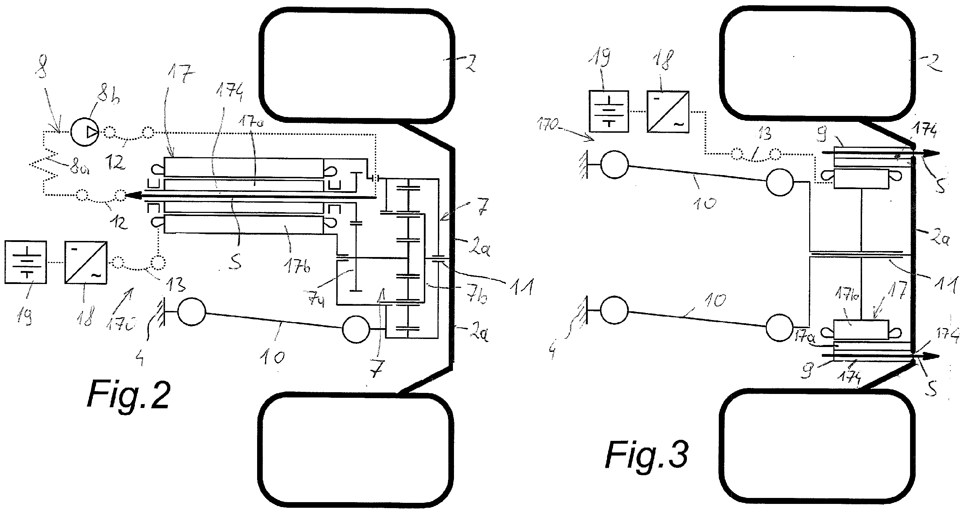

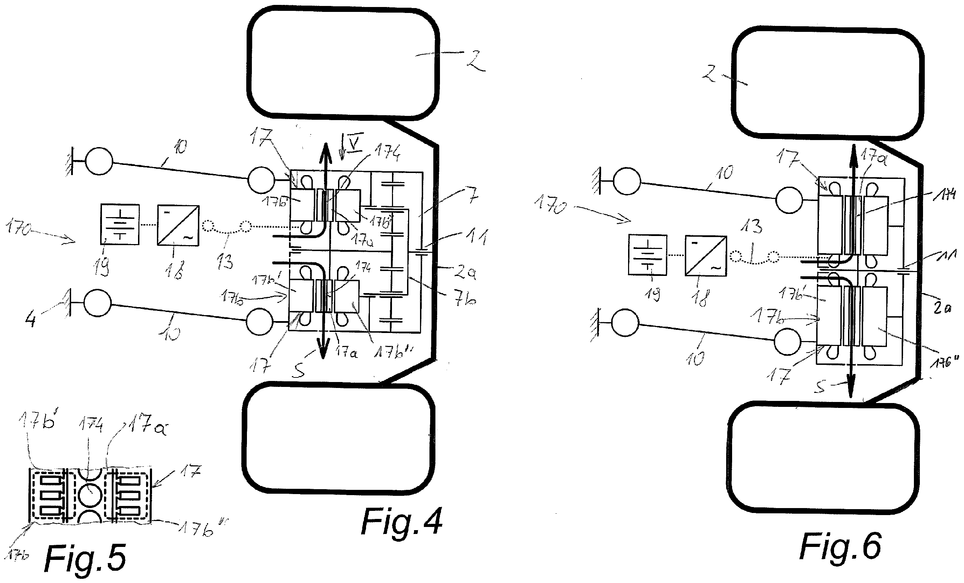

The rotor 17a comprises cooling means for forced cooling, e.g. at least one cooling channel 174 for a cooling media, wherein the cooling channel 174 has a predominantly axial orientation (Fig. 1, Fig. 2, Fig. 3, Fig. 7) or radial orientation (Fig. 4, Fig. 5, Fig. 6), with reference to the shaft axis 173a of the rotor 17a. Fig. 1 and Fig. 2 show examples with a liquid cooling media circulating in a cooling circuit 8 of the rotor 17a, wherein the cooling circuit 8 comprises a cooler 8a and a pump 8b. Fig. 3 to Fig. 6 show examples with air as cooling media, wherein the vehicle 1 may comprise means for air feed through the cooling channels 174 in the rotor 17a. The flow of the cooling medium is indicated with reference sign S. The cooling channel 174 is formed by at least one face of the rotor core 172a or in a heat sink which is thermally connected to the rotor core 172a.

Each of the figures 1 and 2 shows a hysteresis machine 17 with an internal rotor 17a and an external stator 17b. Alternatively the hysteresis machine 17 may designed with an external rotor 17a and an internal stator 17b (Fig. 3).

Fig. 1 shows an electrically propelled vehicle 1 according to a first example with a high-speed hysteresis drive 170 comprising a speed reducer gear 7 and liquid rotor cooling. The hysteresis machine 17 is mounted on a chassis 4 of the vehicle 1 and connected to a driving shaft 2 of the driving wheel 2 via a side shaft 5 with constant velocity joints 6. Reference number 10 refers to suspension links 10 between the chassis 4 and a hub bearing 11 for the drive shaft 2. This example enables lowest possible unsprung weight. There are no wheel brakes necessary. The speed reducer gear 7 comprises a cylindrical gear stage 7a and a planetary gear stage 7b, wherein a first cylindrical gear stage 7a of the speed reducer gear 7 is introduced for higher gear ratio and for access to both shaft ends to provide cooling. High cooling capacities may be realised.

Fig. 2 shows an electrically propelled vehicle 1 according to a second example with a wheel integrated high-speed hysteresis drive 170 comprising a speed reducer gear 7 and liquid rotor cooling. The hysteresis machine 17 is mounted on a hub 2a of the driving wheel 2 and connected to the driving wheel 2 via a speed reducer gear 7. The speed reducer gear 7 comprises a cylindrical gear stage 7a and a planetary gear stage 7b, wherein a first cylindrical gear stage 7a of the speed reducer gear 7 is introduced for higher gear ratio and for access to both shaft ends of the rotor shaft 173 to provide cooling. High cooling capacities may be realised. This example enables small packages of the driving axle (in-wheel design) and of the hysteresis drive 170. Flexible hoses 12 are necessary to connect the cooler 8a and the pump 8b with cooling channels 174 of the hysteresis machine 17. Further the hysteresis machine 17 is electrically connected to the control device 18 via flexible cables 13.

An electrically propelled vehicle 1 according to a third example is shown in Fig. 3. The vehicle 1 comprises a wheel integrated direct hysteresis drive 170 with radial flux external rotor 17a and axial air rotor cooling. The inverted internal stator 17b, the outer rotor 17a enable and a large number of poles enable reduction of the weight of the rotor core 172a (e.g. Alnico), and an increase of the overall torque density. The cooling air may be fed by an external source, e.g., a wheel fan or vehicle aerodynamic deflectors, through cooling channels 174 of the rotor 7a. This example enables a small package of the driving axle (in-wheel design), a high efficiency and a low noise (no geartrain). The hysteresis machine 17 is electrically connected to the control device 18 via flexible cables 13.

According to a fourth and a fifth example shown in Fig. 4 to Fig. 6 the hysteresis machine 17 is embodied as double-sided axial machine with a first stator part 17b' and a second stator part 17b", wherein the cooling 174 channels in the rotor 17a have predominantly radial orientations.

The vehicle 1 shown in Fig. 4 and Fig. 5 comprises a wheel integrated high-speed axial flux hysteresis drive 170 with a speed reducer gear 7 and radial air cooling of the rotor 17a. The hysteresis machine 17 comprises an axial flux, double-sided stator 17b to balance magnetic force, and a disc-shaped rotor 17a, wherein the rotor 17a comprises active Alnico layers with radial air cooling channels 174 between the layers. The centrifugal cooling air flow is pumped through the cooling channels 174 by rotation of the rotor 17a. The speed reducer gear 7 is designed as a planetary gear stage 7b. This enables small size and weight of the high-speed hysteresis drive 170 and a small package of the driving axle (in-wheel design). As before the hysteresis machine 17 is electrically connected to the control device 18 via flexible cables 13.

Fig. 6 shows an electrically propelled vehicle 1 according to the fifth example with a wheel integrated direct hysteresis drive 170 with axial flux and radial air cooling of the rotor 17a of the hysteresis machine 17. The hysteresis machine 17 comprises an axial flux, double-sided stator 17b to balance magnetic force, and a disc-shaped rotor 17a, wherein the rotor 17a comprises active Alnico layers with radial air cooling channels 174 between the layers. Similar to the fourth example, the centrifugal cooling air flow is pumped through the cooling channels 174 by rotation of the rotor 17a. Unlike the fourth example there is no speed reducer gear, but the rotor 17a of the hysteresis machine 17 is mounted on the hub 2a of the driving wheel 2 and connected to the driving wheel 2 directly. This enables a small package of the driving axle (in-wheel design), higher efficiency and lower noise (no geartrain). Again, the hysteresis machine 17 is electrically connected to the control device 18 via flexible cables 13.

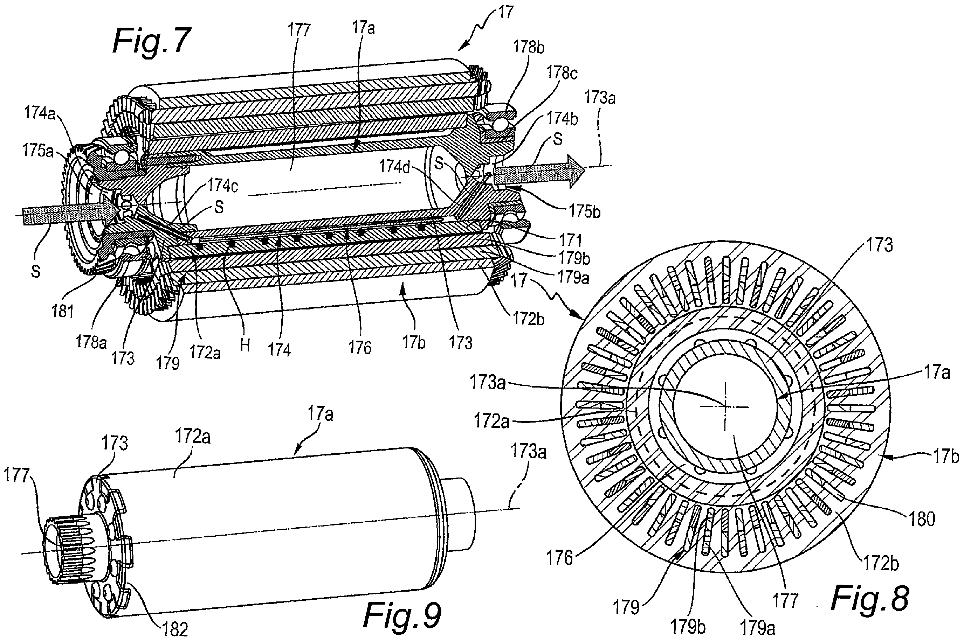

Fig. 7 shows an example of a hysteresis machine 17, wherein the rotor 17a is concentrically arranged within a bore 171 of said external stator 17b, and comprises a core 172a, made of hard magnetic material, e.g. Alnico alloy, and a rotor shaft 173, connected to each other with capability of torque transfer. The rotor 17a comprises at least one channel 174 for a cooling media with at least one inlet 174a at a first shaft end 175a, made of steel, and at least one outlet 174b at a second shaft end 175b, e.g. made of Al alloy. The cooling media of the rotor 17a may be a transmission oil. The flow of the cooling media trough the channels 174 is indicated with arrows S in Fig. 7.

The inlet 174a and outlet 174b are arranged concentrically to the shaft axis 173a, wherein said inlet 174a and outlet 174b are hydraulically connected to a cooling jacket 176 by pluralities of diagonal bores 174c, 174d, arranged around shaft axis 173a. The annular cooling jacket 176 is arranged on the radial surface of the rotor shaft 173.

The rotor core 172a is formed as a tube, wherein the tube consists of anisotropic hard magnetic material. The magnetic domains are oriented in a way that highest coercive force is directed along rotor circumference. As shown in Fig. 9, the rotor core 172a comprises a plurality of teeth 182 on the first shaft end 175a of the tube, wherein the rotor core 172a is connected to the shaft 173 in a positive locking manner for torque transfer. The rotor core 172a is mounted on the shaft 173 in a way that the cooling media from the cooling jacket 176 directly contacts to the inner surface of the rotor core 172a to enable heat transfer from rotor core 172a, as indicated in Fig. 7 by small arrows H. The ends of the rotor core 172a seal the cooling jacket 176 on both sides.

The rotor shaft 173 further comprises a separated air cavity 177 formed around its axis. The cavity 177 is sealed from the annular rotor cooling jacket 176.

The rotor shaft 173 further comprises a pair of the bearings 178a, 178b mounted on it, and positioning the rotor 17a in the stator bore 171. The bearing 178b on the shaft side with the outlet 174b is mounted by the means of a separation sleeve 178c, made of the material with lower heat conductivity than of the steel, e.g. polyamide or ceramics.

The stator 17b comprises a core 172b made of soft magnetic material and a plurality of coils 179a connected to the power converter of the control device 18 with opportunity of forming a multi-pole rotatable magnetic field in the stator bore 171.

The stator 17b comprises semi-closed radial slots 180, the stator windings 179 are arranged as a double layer. As shown in Fig. 8, the coils 179a, 179b of the stator 17b are formed from rectangular copper wire.

The hysteresis drive 170 further comprises a torque transfer device with a driving member 181 fixed on the rotor shaft 173, intended to be engaged with a driven member, e.g., the cylindrical geartrain 24. The rotational axis 24a (Fig. 1) of the driven member is placed apart from the shaft axis 173a of the rotor 17a. The driving member 181 and the driven member for example are configured as gearwheel or sprocket.

If the hysteresis drive 170 operates in a driving mode, the rotational speed of the stator field equals to the rotational speed of the rotor 17a. The motor flux is controlled by at least periodically applied flux current component I_{d} to the stator 17b.

If the hysteresis drive 170 operates in a braking mode, and the output electric power does not exceed instant power consumption from the DC link 19, the rotational speed of the stator field n_{F} equals to the rotational speed n_{R} of the rotor 17a, wherein the motor flux is controlled by at least periodically applied flux current component I_{d} to the stator 17b.

If the hysteresis drive 170 operates in the braking mode, and the potential output electric power at synchronous speed of the stator field and the rotor 17a exceeds instant power consumption from the DC link 19, the rotational speed n_{F} of the stator field is maintained lower than the rotational speed n_{R} of the rotor 17a, wherein the actual output electric power of the hysteresis drive 170 does not exceed instant power consumption from the DC link 19 at maintained speed.

The cooling media is fed through the channel 174 in the rotor 17a at least in case if the hysteresis drive 170 operates in the braking mode, and the potential output electric power at synchronous speed of the stator field and the rotor 17a exceeds instant power consumption from the DC link 19.

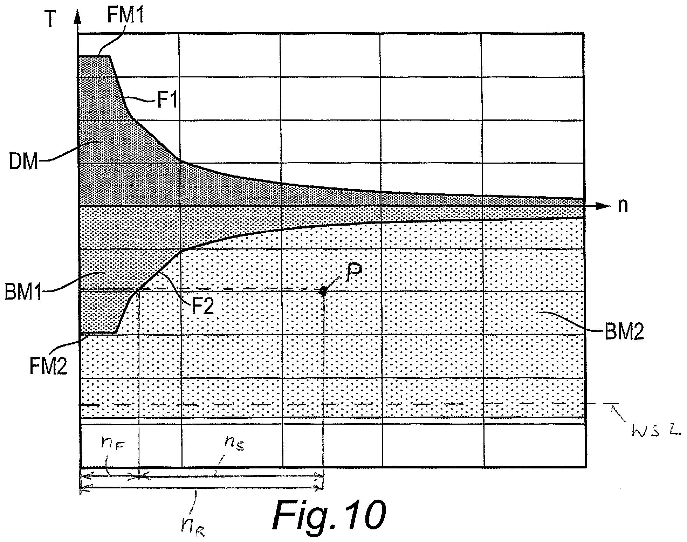

Fig. 10 show a speed n - torque T diagram for the hysteresis drive 170, with a synchronous driving mode DM, a synchronous regenerative braking mode BM1 and an asynchronous (hysteresis) braking mode BM2. F1 and F2 indicate power limitation in flux weakened area, due to DC voltage limitation. FM1 and FM2 indicate torque limitation in synchronous modes. Maximal torque is limited by the maximal remanence flux and stator reaction, which demagnetize the rotor. WSL indicates the wheel slip limit.

High efficiency at driving and regenerative braking modes DM, BM1 may be achieved in case of over excitation of the hysteresis drive 170. The short time periodic pulses of positive flux I_{d} current are applied to the stator 17b in order to magnetize the rotor 17a. After magnetization, the positive flux current I_{d} component may be released, thus reducing stator losses and improving power factor of the hysteresis drive 170. When the speed n increases, and the back-EMF gets closer to maximal inverter output voltage, the short time periodic pulses of negative flux current I_{d} are applied to the stator 17b in order to demagnetize the rotor 17a. The torque T in synchronous modes is provided by field magnet component, which is proportional to motor flux and torque current component I_{d}.

When the required braking power exceeds maximum capacity of the hysteresis drive 170 in synchronous regenerative braking mode BM1, the stator field rotational speed n_{F} (proportional to inverter output frequency) should be limited. The back-EMF and electromagnetic power are limited in this way, because they are proportional to the field rotational speed. The difference between shaft power and stator electromagnetic power is dissipated in the rotor core 172a and evacuated by the cooling media.

The torque in asynchronous braking modes BM2 is provided by sum of the hysteresis torque and eddy-current torque. The hysteresis torque is proportional to minor hysteresis loop area of the rotor core material, and does not depend on slip. The eddy-current torque is slip-dependent. Both torque components in asynchronous modes depend on stator current, and may be controlled by changing said current. The maximal torque in asynchronous mode BM2 is higher than in synchronous mode BM1, because the remanence flux in synchronous mode (without magnetization from the stator current) BM1 is lower, than in asynchronous mode (with magnetization) BM2. The influence of the eddy current on resulting torque depends on design parameters, magnetomotive force and slip speed, and is not shown in Fig. 10.

In Fig. 10 the operating point P for the hysteresis drive 170 is shown for a hysteresis braking mode example, wherein the speed n_{R} of the rotor 17a, the stator field rotational speed n_{F} and the slip speed n_{S} are indicated.

## Claims

1. A method of operating an electrically propelled vehicle (1) with at least one electric machine having a stator (17b) and a rotor (17a) with a rotor core (172), the rotor (17a) being kinematically connected with at least one driving wheel (2), the electric machine being connected to a control device (18) and an energy source, wherein said electric machine is designed as a hysteresis machine (17) and the rotor core (172a) of the rotor (17a) comprises at least one cooling channel, **characterised in that,** the rotor core (172a) of the rotor (17a) is formed of a hard magnetic material, wherein:
- if the vehicle (1) operates in synchronous braking mode, and the output electric power of the hysteresis machine (17) does not exceed instant power capacity of the control device (18) and/or battery, the control device (18) is operated in such a way that a rotational speed of an electromagnetic field of the stator (17b) continues to equal to a rotational speed of the rotor (17a), wherein a magnetic flux is controlled by a at least periodically applied flux current component (I_{d}) to the stator (17b);
- if the vehicle (1) operates in braking mode, and a potential output electric power of the hysteresis machine (17) at synchronous speed of the stator electromagnetic field and the rotor (17a) exceeds an instant power capacity of the control device (18) and/or battery, the control device (18) is operated in such a way that the rotational speed of the electromagnetic field of the stator (17b) is maintained lower than the rotational speed of the rotor (17a), wherein an actual output electric power of the hysteresis machine (17) does not exceed instant power capacity of the control device (18) and/or battery at a maintained speed.

2. The method according to claim 1, **characterised in that** the rotor (17a) is cooled at least in one operating range by a cooling media, wherein the cooling media is fed through at least one cooling channel (174) in the rotor (17a) at least in case if the vehicle (1) operates in braking mode, and the potential output electric power of the hysteresis machine (17) at synchronous speed of the electromagnetic field of the stator (17b) and the rotor (17a) exceeds the instant power capacity of the control device (18).

3. The method according to claim 1 or 2, **characterised in that** if the vehicle (1) operates in driving mode, the rotational speed of the stator (17b) electromagnetic field of the hysteresis machine (17) equals to the rotational speed of its rotor (17a), wherein the magnetic flux is controlled by at least periodically applied flux current component (I_{d}) to the stator (17b).

## Patentansprüche

1. Verfahren zum Betrieb eines elektrisch angetriebenen Fahrzeugs (1) mit wenigstens einer elektrischen Maschine, die einen Stator (17b) und einen Rotor (17a) mit einem Rotorkern (172) aufweist, wobei der Rotor (17a) kinematisch mit wenigstens einem Antriebsrad (2) verbunden ist, wobei die elektrische Maschine mit einer Steuervorrichtung (18) und einer Energiequelle verbunden ist, wobei die elektrische Maschine als Hysteresemaschine (17) ausgebildet ist und der Rotorkern (172a) des Rotors (17a) wenigstens einen Kühlkanal umfasst, **dadurch gekennzeichnet, dass** der Rotorkern (172a) des Rotors (17a) aus einem hartmagnetischem Material gebildet ist, wobei:
- wenn das Fahrzeug (1) im synchronen Bremsmodus arbeitet und die elektrische Abgabeleistung der Hysteresemaschine (17) die momentane Leistungskapazität der Steuervorrichtung (18) und/oder Batterie nicht überschreitet, die Steuervorrichtung (18) so betrieben wird, dass eine Drehzahl eines elektromagnetischen Feldes des Stators (17b) weiterhin einer Drehzahl des Rotors (17a) entspricht, wobei ein magnetischer Fluss durch eine wenigstens periodisch an den Stator (17b) angelegte Flussstromkomponente (I_{d}) gesteuert wird;
- wenn das Fahrzeug (1) im Bremsmodus arbeitet und eine potentielle elektrische Abgabeleistung der Hysteresemaschine (17) bei synchroner Drehzahl des elektromagnetischen Statorfeldes und des Rotors (17a) eine momentane Leistungskapazität der Steuervorrichtung (18) und/oder Batterie überschreitet, die Steuervorrichtung (18) so betrieben wird, dass die Drehzahl des elektromagnetischen Feldes des Stators (17b) niedriger gehalten wird als die Drehzahl des Rotors (17a), wobei eine tatsächliche elektrische Abgabeleistung der Hysteresemaschine (17) die momentane Leistungskapazität der Steuervorrichtung (18) und/oder Batterie bei einer gehaltenen Drehzahl nicht überschreitet.

2. Verfahren nach Anspruch 1, **dadurch gekennzeichnet, dass** der Rotor (17a) wenigstens in einem Betriebsbereich durch ein Kühlmedium gekühlt wird, wobei das Kühlmedium durch wenigstens einen Kühlkanal (174) in dem Rotor (17a) geleitet wird, zumindest dann, wenn das Fahrzeug (1) im Bremsmodus arbeitet und die potentielle elektrische Abgabeleistung der Hysteresemaschine (17) bei synchroner Drehzahl des elektromagnetischen Feldes des Stators (17b) und des Rotors (17a) die momentane Leistungskapazität der Steuervorrichtung (18) überschreitet.

3. Verfahren nach Anspruch 1 oder 2, **dadurch gekennzeichnet, dass**, wenn das Fahrzeug (1) im Antriebsmodus arbeitet, die Drehzahl des elektromagnetischen Feldes des Stators (17b) der Hysteresemaschine (17) der Drehzahl ihres Rotors (17a) entspricht, wobei der magnetische Fluss durch eine wenigstens periodisch an den Stator (17b) angelegte Flussstromkomponente (I_{d}) gesteuert wird.

## Revendications

1. Procédé de gestion d'un véhicule à entraînement électrique (1) comprenant au moins un moteur électrique ayant un stator (17b) et un rotor (17a) équipé d'un noyau de rotor (172), le rotor (17a) étant cinématiquement relié à au moins une roue motrice (2), le moteur électrique étant relié à un dispositif de régulation (18) et à une source d'énergie, le moteur électrique étant réalisé sous la forme d'un moteur à hystérésis (17) et le noyau (172a) du rotor (17a) comprenant au moins un canal de refroidissement,
**caractérisé en ce que**
le noyau (172a) du rotor (17a) est réalisé en un matériau magnétique dur, et
- si le véhicule (1) fonctionne en mode de freinage synchrone et que la puissance électrique de sortie du moteur à hystérésis (17) ne dépasse pas la capacité de puissance instantanée du dispositif de régulation (18) et/ou de la batterie, le dispositif de régulation (18) est actionné de sorte que la vitesse de rotation du champ électromagnétique du stator (17b) reste égale à la vitesse de rotation du rotor (17a), le flux magnétique étant régulé par une composante d'intensité de flux (I_{d}) appliquée au moins périodiquement au stator (17b),
- si le véhicule (1) fonctionne en mode de freinage et que la puissance électrique de sortie possible du moteur à hystérésis (17) à la vitesse synchrone du champ électromagnétique du stator et du rotor (17a) dépasse la capacité de puissance instantanée du dispositif de régulation (18) et/ou de la batterie, le dispositif de régulation (18) est actionné de sorte que la vitesse de rotation du champ électromagnétique du stator (17b) soit maintenue inférieure à la vitesse de rotation du rotor (17a), la puissance électrique de sortie actuelle du moteur à hystérésis (17) ne dépassant pas la capacité de puissance instantanée du dispositif de régulation (18) et/ou de la batterie à la vitesse maintenue.

2. Procédé conforme à la revendication 1,
**caractérisé en ce que**
le rotor (17a) est refroidi au moins dans une plage de fonctionnement par un fluide de refroidissement, le fluide de refroidissement étant fourni par au moins un canal de refroidissement (174) dans le rotor (17a) au moins dans le cas ou le véhicule (1) fonctionne en mode de freinage, et la puissance électrique de sortie possible du moteur à hystérésis (17) à la vitesse synchrone du champ électromagnétique du stator (17b) et du rotor (17a) dépasse la capacité de puissance instantanée du dispositif de régulation (18).

3. Procédé conforme à la revendication 1 ou 2,
**caractérisée en ce que**
si le véhicule (1) fonctionne en mode d'entraînement, la vitesse de rotation du champ électromagnétique du stator (17b) du moteur à hystérésis (17) est égale à la vitesse de rotation de son rotor (17a), le flux magnétique étant régulé par une composante de courant de flux (I_{d}) appliquée au moins périodiquement au stator (17b).
